# EUROPÄISCHE PATENTANMELDUNG

(11) **EP 1 006 372 A2**
(43) Veröffentlichungstag der Anmeldung: **07.06.2000**
(21) Anmeldenummer: 99122798.4
(22) Anmeldetag: 16.11.1999
(51) Int. Cl.: G01W 1/00, G01W 1/08

(54) **Einrichtung zur Erfassung, Verarbeitung und Übermittlung von Schadstoffparametern**

(30) Priorität: 16.11.1998 DE 19852700
(71) Anmelder: Henschel Wehrtechnik GmbH, 34127 Kassel (DE)
(72) Erfinder: Heinzemann, Michael Dipl.-Ing.,Dipl.-Wirtsch.-Ing., 34246 Vellmar (DE); Bräutigam, Martin Dipl.-Phys., 34117 Kassel (DE)
(74) Vertreter: Wolf, Jens, Dipl.-Phys.

(57) **Zusammenfassung**

Eine Einrichtung zur Erfassung, Verarbeitung und Übermittlung von Umweltdaten, insbesondere von Schadstoffparametern soll für eine zeitliche und örtliche Vorhersage des Ausbreitungsverhaltens von Schadstoffen aussagekräftige Meßwerte bereitstellen.

Erfindungsgemäß sind hierfür eine Schadstofferfassungs- und Auswerteeinheit, ein Wetterdatensystem und ein Datenübermittlungsmodul zu einer ortsveränderlichen, fahrzeugunabhängigen Baugruppe zusammengefasst, die mit einer Datenempfangseinrichtung im Informationsaustausch steht.

## Beschreibung

Die Erfindung betrifft eine Einrichtung zur Erfassung, Verarbeitung und Übermittlung von Umweltdaten gemäß dem Oberbegriff des Anspruchs 1.

Für eine großräumige Überwachung von Arealen auf Kontaminationen mit Schad- oder Kampfstoffen ist es bekannt, Fahrzeuge mit einer speziellen Ausrüstung zur Schadstoffdetektion zu versehen.

Auch sind fahrzeugunabhängige Schadstoffanalysegeräte, so z.B. Massenspektrometer, bekannt, die bestimmte Stoffe bzw. Stoffgruppen zu bestimmen ermöglichen.

Diesen Lösungen des Standes der Technik ist gemeinsam, daß bestimmte Parameter zur Verfügung gestellt werden, die jedoch für die Beurteilung des Ausbreitungsverhaltens von Schadstoffen keine hinreichenden Informationen liefern.

Der Erfindung liegt die Aufgabe zugrunde, eine Einrichtung zur Erfassung von Umweltdaten zu schaffen, die für eine zeitliche und örtliche Vorhersage des Ausbreitungsverhaltens von Schadstoffen ausreichend ausssagekräftige Meßwerte bereitstellt.

Erfindungsgemäß sind hierfür eine Schadstofferfassungs- und Auswerteeinheit, ein Wetterdatensystem und ein Datenübermittlungsmodul zu einer ortsveränderlichen, fahrzeugunabhängigen Baugruppe zusammengefaßt, die mit einer Datenempfangseinrichtung im Informationsaustausch steht.

Die Erfindung ist mit dem Vorteil verbunden, daß über die mit dem Wetterdatensystem erfaßten Parameter, wie Windrichtung und Windgeschwindigkeit, die Möglichkeit besteht, den zeitlichen Verlauf der Ausbreitung verschiedener Schadstoffe in unterschiedlichen Konzentrationen mit hinreichender Genauigkeit zu bestimmen.

In bevorzugter Ausgestaltung der Erfindung handelt es sich bei der Schadstofferfassungs- und Auswerteeinheit um ein Ionenmobilitätsspektrometer, das die Bestimmung auch unterschiedlicher Stoffgruppen erlaubt.

Das Wetterdatensystem kann zur Bestimmung der Windrichtung und Windgeschwindigkeit über einen vorzugsweise gasgefüllten, aerodynamisch geformten Schwebekörper verfügen, der durch ein Kopplungselement mit der ortsveränderlichen Baugruppe verbunden ist. Dabei kann das Kopplungselement als flexibles, längenkonstantes Seil ausgebildet sein.

In bevorzugter Ausführung der Erfindung enthält das Wetterdatensystem ein Meßmittel, in dem aus der Richtung des Seiles und der auf das Seil ausgeübten Kraft die Windrichtung und die Windgeschwindigkeit ermittelt werden. Bestandteile des Meßmittels können im Winkel zueinander angeordnete Dehnungsmeßstreifen sein.

Das Seil kann zumindest teilweise als Antenne ausgebildet sein oder eine Antenne enthalten, über die die Daten zur Datenempfangseinheit übertragen werden.

Die Erfindung soll anhand eines Ausführungsbeispiels näher erläutert werden.

Es zeigen:
- Fig. 1: eine erfindungsgemäße Baugruppe im Transportzustand und
- Fig. 2: eine schematische Darstellung des Wetterdatensystems der Baugruppe gemäß Fig.1 in Betriebsbereitschaft.

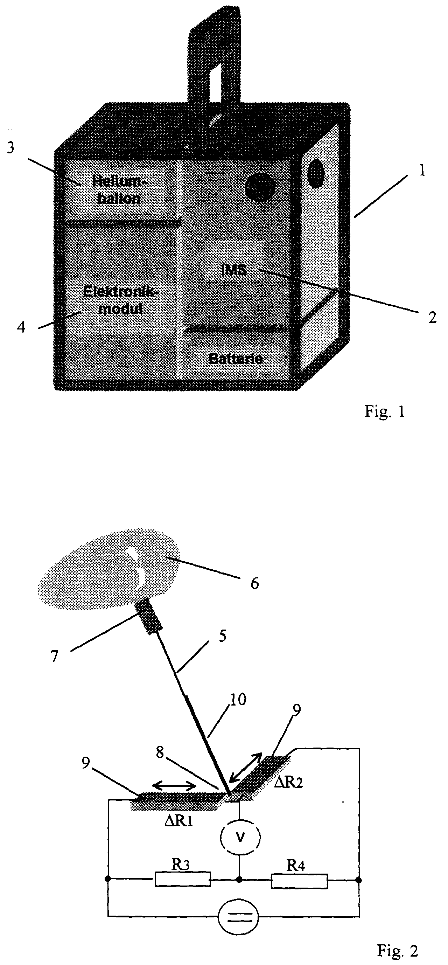

Eine Einrichtung zur Erfassung, Verarbeitung und Übermittlung von Schadstoffparametern ist in Fig.1 als tragbares, im Transportzustand befindliches Gerät dargestellt. Es enthält eine Baugruppe 1, die aus einem Ionenmobilitätsspektrometer 2, einem Wetterdatensystem 3 und einem Datenübermittlungsmodul 4 gebildet ist.

Vom Ionenmobilitätsspektrometer 2 werden die Schadstoffe bzw. Schadstoffgemische analysiert, deren Konzentration bestimmt und über eine Schnittstelle an den Datenübermittlungsmodul 4 weitergeleitet.

Die Aktivierung des Wetterdatensystems 3 erfolgt, indem ein, an einem Seil 5 befestigter Schwebekörper 6 durch eine Gaspatrone 7 aufgeblasen wird. Die aerodynamische Form des Schwebekörpers 6 führt zu einer stabilen Ausrichtung desselben im Wind und zu einer annähernd konstanten, vom Schwebekörper 6 auf das Seil 5 und damit auf den Befestigungspunkt 8 des Seiles 5 an der Baugruppe 1 ausgeübten Kraft.

Die Windrichtung kann aus der azimutalen Ausrichtung des Seiles 5 bestimmt werden, die Windgeschwindigkeit aus der elevatorischen Ausrichtung des Seiles 5. Die Richtungskomponenten des Seiles 5 werden entweder über die Positionsbestimmung des ausgelenkten Seiles 5 oder durch Ermittlung der vom Schwebekörper 6 über das Seil 5 ausgeübten Zugkraft bestimmt. Fig.2 zeigt die Bestimmung von Zugkraft und Richtung am Seil 5 durch Messung von Widerstandsänderungen an mindestens zwei, im Winkel von 90° zueinander angeordneten Dehnungsmeßstreifen 9.

Das Seil 5 besteht im unteren Teil aus einer isolierten, flexiblen Metallader 10, die als Antenne für den Datenübermittlungsmodul 4 dient.

Das baugruppenseitige Seilende ist mechanisch fest mit den Enden der Dehnungsmeßstreifen 9 verbunden, in denen die Zugkräfte am Seil 5 in Änderungen des elektrischen Widerstandes umgesetzt werden.

Die Wetterdaten werden an den Datenübermittlungsmodul 4 weitergegeben und von diesem gemeinsam mit den Schadstoffanalysedaten an eine von der Baugruppe 1 entfernt angeordnete Datenempfangseinrichtung übermittelt. In dieser oder aber bereits im Datenübermittlungsmodul 4 kann der zeitliche Verlauf der Schadstoffkonzentration aufgezeichnet und damit die Ausbreitung der Schadstoffe ermittelt werden. Somit besteht die Möglichkeit zu einem frühen Zeitpunkt auf Veränderungen der Schadstoffkonzentration zu reagieren und ggf. entsprechende Schutzmaßnahmen zu ergreifen.

## Patentansprüche

1. Einrichtung zur Erfassung, Verarbeitung und Übermittlung von Umweltdaten, insbesondere von Schadstoffparametern, dadurch gekennzeichnet, daß eine Schadstofferfassungs- und Auswerteeinheit (2), ein Wetterdatensystem (3) und ein Datenübermittlungsmodul (4) zu einer ortsveränderlichen, fahrzeugunabhängigen Baugruppe (1) zusammengefaßt sind, die mit einer Datenempfangseinrichtung im Informationsaustausch steht.

2. Einrichtung nach Anspruch 1, dadurch gekennzeichnet, daß es sich bei der Schadstofferfassungs- und Auswerteeinheit um ein Ionenmobilitätsspektrometer (2) handelt.

3. Einrichtung nach Anspruch 1, dadurch gekennzeichnet, daß das Wetterdatensystem (3) zur Bestimmung der Windrichtung und Windgeschwindigkeit über einen Schwebekörper (6) verfügt, der über ein Kopplungselement (5) mit der ortsveränderlichen Baugruppe (1) verbunden ist.

4. Einrichtung nach Anspruch 3, dadurch gekennzeichnet, daß es sich bei dem Schwebekörper um einen gasgefüllten, aerodynamisch geformten Hohlkörper (6) handelt.

5. Einrichtung nach Anspruch 3, dadurch gekennzeichnet, daß das Kopplungselement des Schwebekörpers (6) als flexibles, längenkonstantes Seil (5) ausgebildet ist.

6. Einrichtung nach Anspruch 5, dadurch gekennzeichnet, daß das Wetterdatensystem (3) ein Meßmittel (9) enthält, in dem aus der Richtung des Seiles und der auf das Seil ausgeübten Kraft die Windrichtung und die Windgeschwindigkeit ermittelt werden.

7. Einrichtung nach Anspruch 6, dadurch gekennzeichnet, daß zur Bestimmung von Windrichtung und Windgeschwindigkeit zueinander im Winkel angeordnete Dehnungsmeßstreifen (9) Verwendung finden.

8. Einrichtung nach Anspruch 5, dadurch gekennzeichnet, daß das Seil (5) zumindest teilweise als Antenne (10) ausgebildet ist oder eine Antenne (10) aufweist, über die die Daten zur Datenempfangseinheit übertragen werden.

9. Einrichtung nach Anspruch 1, dadurch gekennzeichnet, daß die ortsveränderliche, fahrzeugunabhängige Baugruppe (1) tragbar ausgebildet ist.
